# NEW EUROPEAN PATENT SPECIFICATION

(11) **EP 1 279 955 B2**
(45) Date of publication and mention of the opposition decision: **03.03.2010**
(45) Mention of the grant of the patent: 24.01.2007
(21) Application number: 01401985.5
(22) Date of filing: 24.07.2001
(51) Int. Cl.: G01N 30/64, G01N 27/62, G01N 27/70

(54) **Helium ionization detector**
Heliumionisierungsdetektor
Détecteur à ionisation d'hélium

(43) Date of publication of application: 29.01.2003
(73) Proprietor: Services Petroliers Schlumberger, 75007 Paris (FR); SCHLUMBERGER TECHNOLOGY B.V., 2514 JG Den Haag (NL); SCHLUMBERGER HOLDINGS LIMITED, Road Town, Tortola (VG)
(72) Inventor: Guieze, Paul, 77370 Fontenailles (FR); Le Foll, Pierre, 92160 Antony (FR)
(74) Representative: Hyden, Martin Douglas

(56) References cited:
- US-A- 4 714 891
- US-A- 4 975 648
- US-A- 5 394 091
- US-A- 5 532 599
- US-A- 6 037 179
- VALCO INSTRUMENTS CO. INC.: 'Pulsed Discharge Detector Models D-2 and D-2-I Instruction Manual' October 1998, USA, page 1
- LOCKE D. ET AL.: 'Study of the Photoionization Detector for Gas Chromatography' ANALYTICAL CHEMISTRY vol. 37, no. 3, March 1965, pages 389 - 395

## Description

This invention relates to the field of gas chromatography detectors and particularly to helium gas chromatography detectors. Preferred applications of the detector of the invention are dedicated to characterising and/or quantifying compounds from a natural gas or hydrocarbon liquid at the end of a chromatographic separation process.

It is of particular importance to determine the various compounds constituting either gas or oil produced from a borehole. Actually, these data provide an understanding of the value of both the well and the effluent issued therefrom. Moreover, acquiring such data during the entire well production process allows determination of the evolution of the composition of the "pay zone", and consequent monitoring of the well production.

Gas chromatography is a known technique for separating components from a mixture, and characterising and quantifying each of them. This analysis needs a detector that is sensitive to all of the components of interest and give a response that is proportional to their quantity. The Helium Ionisation Detector is a recent development in the world of gas chromatography as a universal and sensitive means of detection. The principle of this detector is the following:
- a helium stream flows through a pair of spark electrodes that are connected to a high voltage source to create an electric arc inducing a plasma from the helium stream,
- the electrons of the plasma, when returning to their stable state, release their excess energy as photons,
- the photons ionise components eluting from a chromatography column after a chromatographic separation process of a mixture to be tested,
- these produced ions are trapped on a collecting electrode, opposite the spark electrodes in the detector, where collected current is measured. The intensity of the various current peaks, each corresponding to a compound of the mixture, thus indicates the proportion of said compound in the tested mixture.

Such detectors are already described in several former publications, e.g. US 5,394,091. This document discloses a discharge system wherein photons are emitted from a pulsed spark discharge. The photon spectra are primarily a broad band source of excitation. The spark interacts with a flowing helium stream to thereby provide the necessary photon emission. In this system, the apparatus utilises a pair of spaced electrodes that provide a transverse spark across the gap between the electrodes so that the photon emission occurs. The main problems encountered with these detectors are related to inaccuracy of the composition results. These detector apparatus are very sensitive to various construction factors such as the manner in which the electric arc is induced, the design of the collecting electrodes, and the alignment difficulties encountered when assembling the different parts of the detector. All of these reasons lead to residual noise and stability problems of the plasma, the ionisation area and the collecting area.

One object of the invention is thus to provide a detector that is more reliable than those currently available. Another object is to provide a detector that is constructed in such a way that any noise factor is significantly decreased or avoided.

The present invention provides a helium ionisation detector as defined in claim 1.

The collecting electrode comprises first and second parts, the first part being a circular hollow part that is set around the output of the chromatographic separation device. This characteristic also participates in drastically enhancing the accuracy of the detector of the invention. The design of the collecting electrode permits capture of every eluted component from the chromatographic separation device, after its interaction with the plasma.

According to the invention, the ionisation holder and/or the detector body are designed in such a way that the detection zone is predetermined and restricted.

As a result of the design of the detector body and/or of the ionisation holder, the helium detector of the invention permits precise definition of the area in which the plasma and the components to be quantified will meet. These technical features significantly enhance the accuracy of the detector of the invention by drastically decreasing the noise encountered when compared to existing detectors. The design of the detector allows creation of a "sharp" detection area wherein any stability problem of the plasma is avoided because the loss of detected components particles, as is encountered in the detectors of the art where the detection zone is vague and too wide, is avoided.

In a preferred embodiment of the invention, the ionisation section contains parts of the ionisation system of the helium flow, the parts being self centred in the ionisation section by the helium supply section.

This feature permits a very stable plasma from the helium flows to be provided; any noise due to the space between the different parts of the ionisation system being avoided. Furthermore, the self-centred link between the helium supply section and the ionisation section avoids any noise due to misalignment when mounting the components as is found in the detector known in the state of the art.

Preferably, the parts of the ionisation system comprise a spark electrode assembly, the assembly comprising an anode and a cathode that are both bonded in an insulating cylinder.

By providing both the cathode and the anode in a single rigid device, any misalignment problems are avoided when one of these elements needs to be replaced. According to the detector of the invention, the entire cathode/anode/cylinder assembly can be changed in such a case, thus avoiding any defect when mounting the new assembly in the detector.

In a preferred embodiment of the invention, the anode and the cathode tips are designed in such a way that the spark is always created at the same place.

This characteristic also permits significant enhancement of the accuracy of the detector of the invention. The fact that the spark is always created at the same place leads to the creation of a stable and space delimited plasma from the helium flow.

In an embodiment of the invention, the anode and the cathode are preferably made out of pure tungsten. This features enables a significant increase in the lifetime of the electrode, mostly because the pure tungsten has a high melting point, which reduces the metal transport from one electrode to an other.

Preferably, the parts of the ionisation process are insulated from the ambient air surrounding the ionisation section. Consequently, any electrical arc outside the ionisation section is avoided, which would lead to unstable plasma and makes the detector unsafe.

In a preferred embodiment of the invention, the detector body further comprises a tube that leads the plasma from the ionisation holder to the output of the gas chromatographic separation device. Preferably, the design of the tube enhances the speed of the plasma towards the output of the gas chromatographic separation device. This characteristic increase the stability of the plasma and also permits to locate precisely the detection zone by providing a "sharp" plasma flow towards the components to be quantified.

Additional objects and advantages of the invention will become apparent to those skilled in the art upon reference to the detailed description taken in conjunction with the provided figures:
Figure 1 is a view of a helium ionisation detector according to the invention,
Figures 2 and 2a are detailed views of the spark electrode assembly according to the invention, and
Figures 3 and 3a are detailed views of the collecting electrodes according to the invention.

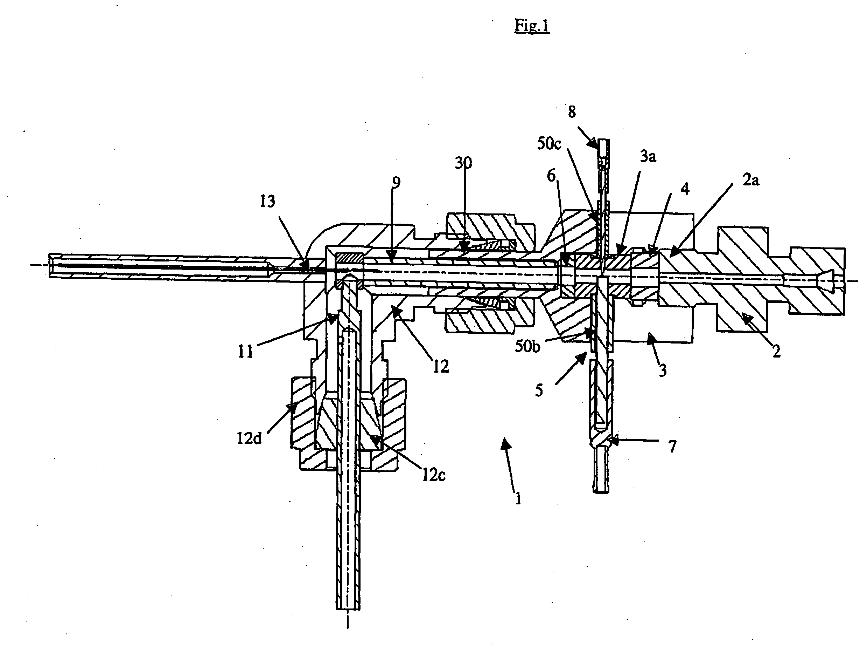

Figure 1 shows a complete view of the helium ionisation detector according to the invention. The figure 1 thus represents a helium detector 1, which is used for identifying and quantifying compounds from a natural gas or hydrocarbon liquid at the end of a chromatographic separation process.

The chromatographic separation column, not shown, is of the type known in the art. This typical column comprises a mobile phase and a stationary phase. The mobile phase comprises a carrier gas (helium in the preferred embodiment of the invention) into which a sample of gas (or liquid hydrocarbon) containing one or more sample compounds is injected. The stationary phase comprises one or more solid or liquid constituents within the column which exhibit different retention times for the "unknown" sample compounds. The sample of gas containing unknown compounds is injected over a relative short period of time into the carrier gas flow, near the input of the column. Sample compounds are retained for different times by the stationery element of the column, and then subsequently released. Upon release, each type of compound is swept by the carrier gas from the column and discharged in the form of a "peak" or maxima in concentration in the carrier gas. The column thus separates sample compounds by eluting them in the form of concentration peaks in the output carrier gas at varying times. The chromatographic separation process does not quantify the concentrations of the sample compounds, but does separate multiple compounds for further analysis using the helium ionisation detector 1 of the invention, wherein the eluted gas from the column, which consists in helium carrier gas and separated compounds, collide with the photons created inside the detector as will be explained below.

As shown in figure 1, the detector 1 comprises a helium supply section 2, wherein helium is introduced at constant flow rate according to a well-known process, not shown. An ionisation section 3, designed to enclose all parts of the ionisation process, follows the helium supply section 2. Actually, the ionisation section 3 contains a recess 3a where a spark electrode assembly 5 is situated. The helium introduced in the helium supply section 2 thus flows through the ionisation section 3 in order to create a plasma when a high voltage is applied to the spark electrode assembly 5. Both sides of this spark electrode assembly are sealed with PTFE gasket 4 and 6. The gasket 6 is pressed against an abutment in the recess 3, the spark electrode assembly 5 is pressed against the gasket 6 and the gasket 4 is pressed against the assembly 5 by a compression-threaded part 2a of the helium supply section 2. Consequently, inside the ionisation section 3, the spark assembly 5 is seated and sealed with the gaskets 4 and 6 that are self-centred by the recess 3 and the threaded-part 2a. The helium supply section 2 is thus used as a compression means to maintain all ionisation holder parts together, ensuring a good seal and connection to the ionisation helium stream.

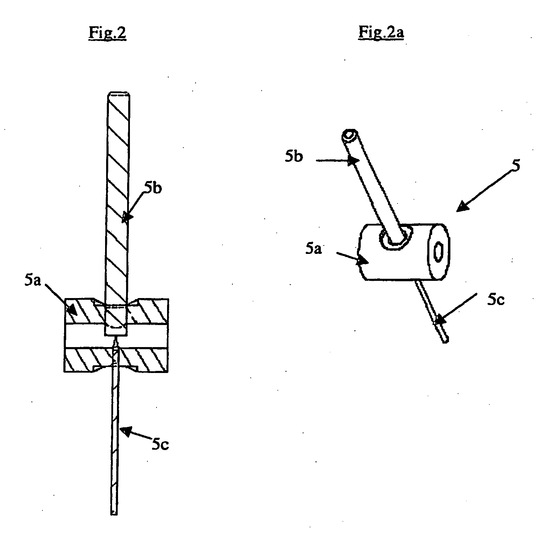

As showed in detail in figures 2 and 2a, the spark electrode assembly 5 comprises an insulating cylinder 5a, wherein two electrodes are bonded, an anode 5c and a cathode 5b. Both the cathode and the anode are electrically connected to a high voltage source, not shown, through electrical connectors 7 and 8. In a preferred embodiment of the invention, the cylinder 5a is made of ceramic (electrically inert and heat resistant) and the electrodes are bonded inside it with high temperature resistant glue and with a high accuracy as far as centring and gap are concerned. Preferably, both the anode 5c and the cathode 5b are made of pure tungsten rod. This feature enables a significant increase in the lifetime of the electrodes, mostly because the pure tungsten has a high melting point, which reduces the metal transport from one electrode to the other. The design of the spark electrode assembly 5 reduces significantly the noise problems encountered with the detectors known in the state of the art. This design creates a stable plasma, which participates in providing a restricted and predetermined emission zone in the detector of the invention, as it will be further explained below. Three different aspects are to be considered in this assembly 5.

First, the way the assembly is mounted significantly reduces any misalignment and subsequent perturbation in the area where the spark is supposed to be created. The fact that both electrodes are bonded into the ceramic cylinder 5a makes the assembling process much easier when installing a new electrode or when cleaning the detector. There is no need for alignment because the electrodes only need to be inserted in the cylinder. The cathode and the anode also have preferentially two different diameters, which prevent any erroneous connection of the power supply polarities. In a preferred embodiment of the invention, the cathode is made of a 1,6mm diameter pure tungsten rod and the anode is made of a 0,5mm diameter pure tungsten rod.

Second, the anode and cathode tips are designed in such a way that the spark is always created a the same place, and with the same shape when applying a DC voltage between said spark electrodes: in a preferred embodiment of the invention, the cathode has a flat polished tip and the anode has a sharp 25° tip, these electrodes being separated by a gap of 0,100mm. This feature ensures that the spark is located always at the tip of the sharp electrode, spaying on the flat zone of the cathode, which permits induction of a constant plasma shape. The resulting noise is therefore reduced to a minimum, as this often comes from a micro-displacement of the spark between two arcs in the detectors known in the state of the art. Furthermore, both electrodes are finely polished to an optical grade, which also avoids arc initiation at a surface defect, ensuring always the correct position of the spark.

Third, any contact with the ambient air is prevented, thus avoiding the risk of initiation of an electrical arc outside the spark assembly 5. In a preferred embodiment of the invention, two PEEK (PolyEther Ether Ketone) sleeves 50b and 50c insulate each of the electrode 5b and 5c, which prevents any arc in the ambient air between the electrode and the spark assembly 5.

Referring back to figure 1, the spark excitation from the ionisation section 3 generates a plasma from the helium stream which in turn produces photons that are eluted from the ionisation section 3 toward a chromatographic column tip 13 via a tube 9. The column tip 13 is connected to electric ground and is set beyond a collecting electrode 11. The chromatographic column tip 13, the tube 9 and the collecting electrode 11 are inserted in a detector body 12. This detector body 12 is made of a standard elbow fitting, which is modified to include an additional pipe, , for connection to the wall of the chromatograph and allow the column insertion. Preferentially, the detector body 12 is made of stainless steel and the tube 9 thus insulates the plasma, photons and ions from the body. An output part 30 of the ionisation section 3 is fixed into the detector body 12 in a sealed manner. Advantageously, the output part 30 is fixed with a standard compression fitting and a graphite ferrule that ensures electrical grounding. These features also permit the detector body 12 and the ionisation section 3 to be self-centred on one another. As it can be seen on figure 1, the tube 9 seats against the collecting electrode 11 from one side and against the output of the ionisation section 3 from the other side.

A potential is applied to the collecting electrode 11 and an electrometer measures the current passing through the system. When the different compounds exit the column tip 13, in order correspond to their nature, they are ionised by the photons of the helium stream in the area where the collecting electrode is situated. Consequently, the current passing through said electrode 11 is modified in a scale depending on the proportion in the mixture that is tested of each compound eluted from the column tip 13. The energy of photons produced in the electrode assembly is in the range of 13.5 - 17.7 eV, which is sufficient for ionising all component of interest in natural gas or petroleum liquids.

In a preferred embodiment of the invention, the tube 9 is made of borosilicate glass in order to improve the detector inertness. Furthermore, it is advantageous to decrease the internal diameter of this tube, compared to the tubes known in the art. Preferentially, the tube 9 has a 4 mm external diameter and a 2 mm internal diameter. The tube 9 thus precisely guides the plasma to the eluted compounds, and the linear velocity of the helium is increased, which reduces the diffusion of the compounds at the column tip. This feature avoids any re-mixing of the eluted compounds, which would be detrimental to the resolution of the detector as it can be seen in the detector known in the state of the art.

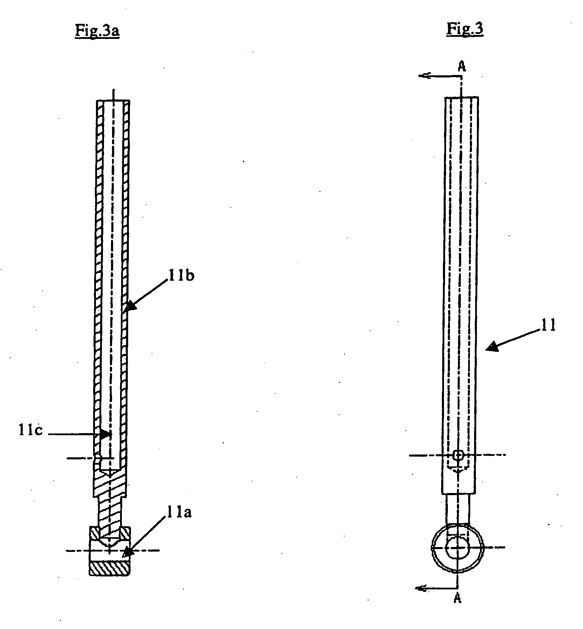

As it can be seen in detail on figures 3 and 3a, the collecting electrode 11 is made in two parts 11 a and 11b. The first part 11a is a circular hollow part, which is set concentrically around the column tip 13. It is this part that detects the variation in the applied current, the part 11a being associated with the column tip 13 that is preferentially made of stainless steel and used as the second electrode for the collecting process. The design of this first part significantly enhances the resolution and accuracy of the detector by providing a restricted and predetermined detection zone where most of the eluted components to be quantified are trapped, after their collision with the plasma. The fact that the part 11a surrounds the column tip 13 allows a very precise detection of the current variation due to the eluted compounds.

The second part 11b of the collecting electrode is a rod that maintains it mechanically in the detector body 12, and includes a channel 11c for venting the detector gas to the atmosphere after detection by the first part 11a. A standard poly-imide insulating ferrule 12c and compression nut 12d isolate the interior of the detector body 12 and the passage of the second part 11b to the atmosphere.

The overall design of the detector according to the invention thus provides very precise results when quantifying the various compounds in a gas or fluid mixture to be tested. Furthermore, most of the different parts of this detector being inserted and then insulated into one another, the assembly process is particularly simple and avoids any misalignment problem and subsequent noise.

## Claims

1. A helium ionisation detector adapted to quantify components that are eluted from a gas chromatographic separation device (13), said detector comprising:
(i) a helium supply section (2);
(ii) an ionisation section (3) through which the helium flows in order.to create a plasma; and
(iii) a detector body (12) providing a detection zone wherein the plasma meets said components, said detector body comprising a collecting electrode (11) to which an electrical potential is applied such that a modification of said potential is proportional to the amount of the components to be quantified;
**characterised in that** the collecting electrode comprises trapping means (11a, 11b) defining a restricted detection zone; wherein the collecting electrode (11) comprises first (11a) and second (11b) parts, the first part being a circular hollow part that is set around the output of the chromatographic separation device; and wherein the second part (11b) of the collecting electrode includes a channel (11c) for venting the components to be quantified to the atmosphere.

2. A helium ionisation detector according to of claim 1, wherein the ionisation section (3) contains parts (5, 5a, 5b, 5c) of an ionisation system of the helium flow, the parts being self centred in the ionisation holder by the helium supply section (2, 2a).

3. A helium ionisation detector according to claim 2, wherein the parts of the ionisation system comprise a spark electrode assembly (5), the assembly comprising an anode (5c) and a cathode (5b) that are both bonded in an insulating cylinder (5a).

4. A helium ionisation detector according to claim 3, wherein the anode (5c) and the cathode (5b) tips are designed in such a way that the spark is always created at the same place.

5. A helium ionisation detector according to claim 3 or 4, wherein the anode and the cathode are made out of pure tungsten.

6. A helium ionisation detector according to any of claims 2 to 5, wherein the parts of the ionisation system (5, 5a, 5b, 5c) are insulated from the ambient air surrounding the ionisation section.

7. A helium ionisation detector according to any preceding claim, wherein the detector body (12) further comprises a tube (9) that leads the plasma from the ionisation section (3) to the output (13) of the gas chromatographic separation device.

8. A helium ionisation detector according to claim 7, wherein the design of the tube (9) enhances the speed of the plasma towards the output (13) of the gas chromatographic separation device.

9. A helium ionisation detector according to any preceding claim, wherein the ionisation section (3) and the detector body (12) are linked in a self centred and sealed manner.

## Patentansprüche

1. Helium-Ionisationsdetektor, ausgestaltet, um Komponenten, die aus einer Gaschromatographie-Trennvorrichtung (13) eluiert werden, quantitativ zu bestimmen, wobei der Detektor umfasst:
(i) einen Helium-Versorgungsabschnitt (2);
(ii) einen Ionisationsabschnitt (3), durch den das Helium strömt, um ein Plasma zu erzeugen; und
(iii) einen Detektorkörper (12), der eine Detektionszone schafft, in der das Plasma auf die Komponenten trifft, wobei der Detektorkörper eine Sammelelektrode (11) umfasst, an die ein elektrisches Potenzial so angelegt ist, dass eine Veränderung des Potenzials proportional zu der Menge der quantitativ zu bestimmenden Komponenten ist;
**dadurch gekennzeichnet, dass** die Sammelelektrode Fangmittel (11a, 11b) umfasst, die eine eingeschränkte Detektionszone definieren, wobei die Sammelelektrode (11) einen ersten (11a) und einen zweiten (11b) Teil umfasst, und der erste Teil ein runder, hohler Teil ist, der um den Ausgang der Gaschromatographie-Trennvorrichtung angeordnet ist; und wobei der zweite Teil (11b) der Sammelelektrode einen Kanal (11c) zum Entlüften der quantitativ zu bestimmenden Komponenten in die Atmosphäre beinhaltet.

2. Helium-Ionisationsdetektor gemäß Anspruch 1, wobei der lonisationsabschnitt (3) Teile (5, 5a, 5b, 5c) eines Ionisationssystems der Heliumströmung beinhaltet, wobei die Teile selbstzentriert in dem Ionisationshalter durch den Helium-Versorgungsabschnitt (2, 2a) sind.

3. Helium-Ionisationsdetektor gemäß Anspruch 2, wobei die Teile des Ionisationssystems eine Funkenelektroden-Baugruppe (5) aufweisen, wobei die Baugruppe eine Anode (5c) und eine Kathode (5b) aufweist, die beide in einem Isolationszylinder (5a) verbunden sind.

4. Helium-Ionisationsdetektor gemäß Anspruch 3, wobei die Spitzen der Anode (5c) und der Kathode (5b) so ausgestaltet sind, dass der Funken immer an der gleichen Stelle erzeugt wird.

5. Helium-Ionisationsdetektor gemäß Anspruch 3 oder 4, wobei die Anode und die Kathode aus reinem Wolfram hergestellt sind.

6. Helium-Ionisationsdetektor gemäß einem der Ansprüche 2 bis 5, wobei die Teile des Ionisationssystems (5, 5a, 5b, 5c) von der den Ionisationsabschnitt umgebenden Umgebungsluft isoliert sind.

7. Helium-Ionisationsdetektor gemäß einem vorhergehenden Anspruch, wobei der Detektorkörper (12) ferner ein Rohr (9) aufweist, das das Plasma von dem Ionisationsabschnitt (3) zum Ausgang (13) der Gaschromatographie-Trennvorrichtung leitet.

8. Helium-Ionisationsdetektor gemäß Anspruch 7, wobei die Ausgestaltung des Rohrs (9) die Geschwindigkeit des Plasmas in Richtung des Ausgangs (13) der Gaschromatographie-Trennvorrichtung erhöht.

9. Helium-Ionisationsdetektor gemäß einem vorhergehenden Anspruch, wobei der Ionisationsabschnitt (3) und der Detektorkörper (12) in einer selbstzentrierenden und abdichtenden Weise verbunden sind.

## Revendications

1. Détecteur à ionisation d'hélium adapté pour quantifier des composants qui sont élués par un dispositif de séparation chromatographique en phase gazeuse (13), ledit détecteur comprenant :
(i) une section d'alimentation en hélium (2) ;
(ii) une section d'ionisation (3) à travers laquelle l'hélium circule afin de créer un plasma ; et
(iii) un corps de détecteur (12) fournissant une zone de détection dans laquelle le plasma rencontre lesdits composants, ledit corps de détecteur comprenant une électrode collectrice (11) à laquelle un potentiel électrique est appliqué de sorte qu'une modification dudit potentiel soit proportionnelle à la quantité des composants à quantifier ;
**caractérisé en ce que** l'électrode collectrice comprend des moyens de piégeage (11a, 11b) définissant une zone de détection restreinte ; dans lequel l'électrode collectrice (11) comprend des première (11a) et deuxième (11b) parties, la première partie étant une partie creuse circulaire qui est placée autour de la sortie du dispositif de séparation chromatographique ; et dans lequel la deuxième partie (11b) de l'électrode collectrice comprend un canal (11c) pour décharger les composants à quantifier vers l'atmosphère.

2. Détecteur à ionisation d'hélium selon la revendication 1, dans lequel la section d'ionisation (3) contient des parties (5, 5a, 5b, 5c) d'un système d'ionisation de la circulation d'hélium, les parties étant autocentrées dans le support d'ionisation par la section d'alimentation en hélium (2, 2a).

3. Détecteur à ionisation d'hélium selon la revendication 2, dans lequel les parties du système d'ionisation comprennent un ensemble d'électrode d'allumage (5), l'ensemble comprenant une anode (5c) et une cathode (5b) qui sont toutes deux liées dans un cylindre isolant (5a).

4. Détecteur à ionisation d'hélium selon la revendication 3, dans lequel les extrémités de l'anode (5c) et de la cathode (5b) sont conçues de manière à ce que l'étincelle soit toujours créée au même endroit.

5. Détecteur à ionisation d'hélium selon la revendication 3 ou 4, dans lequel l'anode et la cathode sont réalisées en tungstène pur.

6. Détecteur à ionisation d'hélium selon l'une quelconque des revendications 2 à 5, dans lequel les parties du système d'ionisation (5, 5a, 5b, 5c) sont isolées de l'air ambiant entourant la section d'ionisation.

7. Détecteur à ionisation d'hélium selon l'une quelconque des revendications précédentes, dans lequel le corps de détecteur (12) comprend en outre un tube (9) qui conduit le plasma de la section d'ionisation (3) vers la sortie (13) du dispositif de séparation chromatographique en phase gazeuse.

8. Détecteur à ionisation d'hélium selon la revendication 7, dans lequel la conception du tube (9) améliore la vitesse du plasma vers la sortie (13) du dispositif de séparation chromatographique en phase gazeuse.

9. Détecteur à ionisation d'hélium selon l'une quelconque des revendications précédentes, dans lequel la section d'ionisation (3) et le corps de détecteur (12) sont liés de manière autocentrée et hermétique.
